# EUROPEAN PATENT APPLICATION

(11) **EP 4 503 420 A1**
(43) Date of publication of application: **05.02.2025**
(21) Application number: 22943382.6
(22) Date of filing: 03.08.2022
(51) Int. Cl.: H02M 3/157

(54) **TRAIN AND TRACTION DRIVE SYSTEM AND CONTROL METHOD THEREOF**

(30) Priority: 27.05.2022 CN 202210590014
(71) Applicant: CRRC ZHUZHOU ELECTRIC LOCOMOTIVE RESEARCH INSTITUTE CO., LTD., Shifeng District Zhuzhou, Hunan 412001 (CN)
(72) Inventor: FENG, Jianghua, Zhuzhou, Hunan 412001 (CN); MEI, Wenqing, Zhuzhou, Hunan 412001 (CN); HU, Yunqing, Zhuzhou, Hunan 412001 (CN); WEN, Yuliang, Zhuzhou, Hunan 412001 (CN); WANG, Yue, Zhuzhou, Hunan 412001 (CN); HU, Liang, Zhuzhou, Hunan 412001 (CN); LI, Hongbo, Zhuzhou, Hunan 412001 (CN); LI, Miao, Zhuzhou, Hunan 412001 (CN); ZHOU, Zhenbang, Zhuzhou, Hunan 412001 (CN); LIANG, Xifan, Zhuzhou, Hunan 412001 (CN); FU, Gang, Zhuzhou, Hunan 412001 (CN); ZHANG, Yan, Zhuzhou, Hunan 412001 (CN); WU, Yi, Zhuzhou, Hunan 412001 (CN); CHEN, Xin, Zhuzhou, Hunan 412001 (CN)
(74) Representative: Laufhütte, Dieter
(86) International application number: PCT/CN2022/109844
(87) International publication number: WO 2023/226191

(57) **Abstract**

A train and a traction drive system and control method thereof, which are applied to the technical field of rail transport. The traction drive system of the train comprises: a traction drive system main circuit, a controller, and an active voltage regulation circuit (40) arranged on a direct current bus. The controller is used for determining a voltage reference value of a target capacitor (C1), taking the voltage reference value as a target voltage of the target capacitor (C1), performing feedback control, and outputting a first control quantity; determining a current reference value of a target inductor (L1) on the basis of the current voltage and frequency of a traction network, taking the current reference value as a current target of the target inductor (L1), performing feedback control, and outputting a second control quantity; and superimposing the first control quantity and the second control quantity and modulating a corresponding PWM pulse so as to control on/off of a corresponding switch tube in the active voltage regulation circuit (40).

## Description

The present application claims priority to Chinese Patent Application No.202210590014.8, titled "TRAIN AND TRACTION DRIVE SYSTEM AND CONTROL METHOD THEREOF", filed on May 27, 2022 with the China National Intellectual Property Administration, which is incorporated herein by reference in its entirety.

### FIELD

The present disclosure relates to the field of rail transportation technology, and in particular to a train, and a traction drive system of the train and a method for controlling the traction drive system of the train.

### BACKGROUND

A single-phase converter has the advantages of high efficiency, high reliability, a simple structure and easy modularization, which is widely applied to various systems such as locomotive traction, multiphase alternating-current (AC) transmission, cascading multilevel, uninterruptible power supply, photovoltaic grid-connection and the like. However, a secondary pulsating power inherent in the single-phase converter will cause secondary pulsation of a voltage of direct-current (DC) bus, endangering the entire system. For example, for a single-phase AC power grid, the secondary pulsation of the voltage of the DC bus will introduce third, fifth, seventh low-frequency harmonics, and so on, into the power grid after PWM modulation.

In addition, for a traction frequency conversion system, the secondary pulsation of the voltage of the DC bus will also generate ultra-low frequency differential frequency current on a motor stator winding, thereby increasing an electromagnetic loss of the motor, causing serious heating of the motor core, and producing low-frequency electromagnetic torque pulsation and mechanical noise. Requirements for the voltage and current design margin of converter switching devices increases due to the secondary pulsation of the voltage of the DC bus. Therefore, it is desirable to suppress the secondary pulsation of the voltage of the DC bus and eliminate adverse effects from the secondary pulsation.

In a current scheme, a large capacitor or a LC resonant circuit is generally connected in parallel on the DC side to suppress the secondary pulsation of the voltage of the DC bus, but this will increase a volume and a mass of the system, and the power density is low. Moreover, the LC resonant circuit is sensitive to parameter offset. In a case that the parameter mismatch occurs, a large circulating current may be generated between a DC support capacitor and the LC resonant circuit, resulting in capacitor damage.

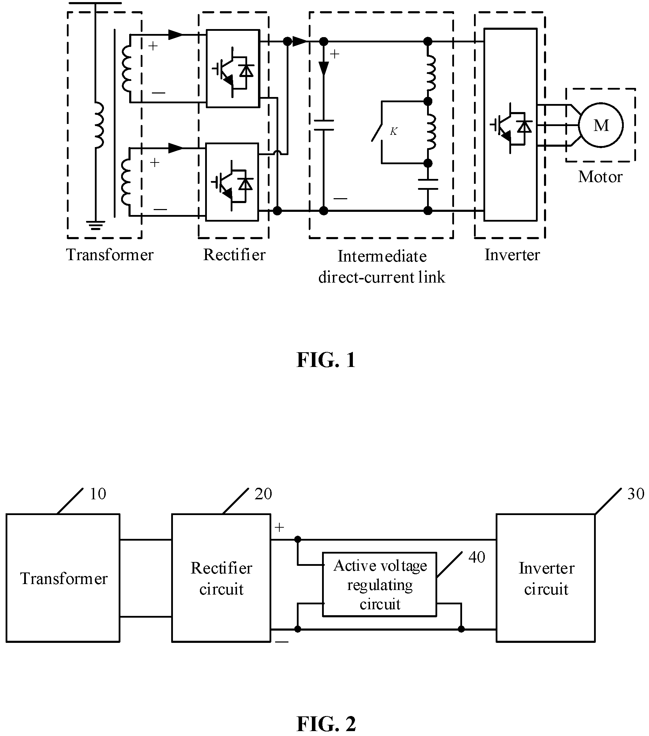

However, as the multi-current traction conversion system operates at different power supply frequencies, for example, in a case of FIG. 1, it operates at power supply frequencies of 25kV/50Hz and 15kV/16.7Hz. In a case that the conversion system operates at different power supply frequencies, a pulse rate of the secondary pulsation on the DC side changes accordingly, and the LC resonant circuit with a single resonant frequency cannot meet the demand of suppressing the secondary pulsation at different frequencies. Therefore, according to the solution shown in FIG. 1, it is required to switch different filter reactances through a switch K to adjust the resonant frequency of the LC circuit, which further increases the complexity of the system and reduces the reliability. Moreover, in a case that there are more power supply frequencies, it is required to set more sets of switchable filter reactances according to this conventional solution, which further increases the complexity of the system.

Based on the above, how to effectively suppress the secondary pulsation of the voltage of the DC bus at different power supply frequencies, without increasing the complexity of the system, and ensuring the reliability of the system, is currently expected to be realized by those skilled in the art.

### SUMMARY

The present disclosure is to provide a train and a traction drive system of the train and a method for controlling the traction drive system of the train, so as to effectively suppress secondary pulsation of a voltage of a direct-current bus at different power supply frequencies without increasing complexity of the system, to ensure reliability of the system.

In order to overcome the aforementioned shortcomings, technical solutions are provided as follows according to the present disclosure.

A traction drive system of a train includes:
a traction drive system main circuit including a transformer, a rectifier circuit and an inverter circuit connected in sequence;
an active voltage regulating circuit having a positive input terminal connected to a positive terminal of a direct-current bus of the traction drive system main circuit, a negative input terminal connected to a negative terminal of the direct-current bus of the traction drive system main circuit, and a negative output terminal connected to the negative terminal of the direct-current bus; and
a controller configured to determine a voltage reference value of a target capacitor, perform feedback control by using the voltage reference value as a target voltage of the target capacitor, and output a first control quantity; determine a current reference value of a target inductor based on a current voltage frequency of a traction network, and perform feedback control by using the current reference value as a target current of the target inductor, and output a second control quantity; superimpose the first control quantity and the second control quantity to generate a PWM pulse by modulation, control a switch in the active voltage regulating circuit to be turned on or off based on the PWM pulse to cause a voltage of the target capacitor to follow the voltage reference value and a current of the target inductor to follow the current reference value;
wherein the target capacitor is any capacitor selected from the active voltage regulating circuit, and the target inductor is any inductor selected from the active voltage regulating circuit.

In an embodiment, the active voltage regulating circuit is an active voltage regulating circuit based on a two-level buck topology, and the active voltage regulating circuit includes:
a first switch, a second switch, a first capacitor serving as the target capacitor, and a first inductor serving as the target inductor;
wherein a first terminal of the first switch serves as the positive input terminal of the active voltage regulating circuit and is connected to the positive terminal of the direct-current bus; a second terminal of the first switch is connected to a first terminal of the second switch and a first terminal of the first inductor; a second terminal of the second switch serves as a negative input terminal of the traction drive system main circuit and is connected to the negative terminal of the direct-current bus; a second terminal of the first inductor is connected to a first terminal of the first capacitor; a second terminal of the first capacitor serves as the negative output terminal of the active voltage regulating circuit and is connected to the negative terminal of the direct current bus; and a control terminal of the first switch and a control terminal of the second switch are connected to the controller.

**In** an embodiment, a first battery in the train is applied as the first capacitor.

**In** an embodiment, the active voltage regulating circuit is an active voltage regulating circuit based on a two-level boost topology, and the active voltage regulating circuit includes:
a third switch, a fourth switch, a second capacitor serving as the target capacitor, and a second inductor serving as the target inductor;
wherein a first terminal of the second inductor serves as the positive input terminal of the active voltage regulating circuit and is connected to the positive terminal of the direct-current bus; a second terminal of the second inductor is connected to a second terminal of the third switch and a first terminal of the fourth switch; a second terminal of the fourth switch serves as a negative input terminal of the traction drive system main circuit and is connected to the negative terminal of the direct-current bus; a first terminal of the third switch is connected to a first terminal of the second capacitor; a second terminal of the second capacitor serves as the negative output terminal of the active voltage regulating circuit and is connected to the negative terminal of the direct-current bus; and a control terminal of the third switch and a control terminal of the fourth switch are connected to the controller.

In an embodiment, when the controller determines the voltage reference value of the target capacitor, performs feedback control by using the voltage reference value as the target voltage of the target capacitor, and outputs the first control quantity, the controller is configured to:
determine the voltage reference value of the target capacitor;
detect an actual voltage value of the target capacitor and perform filtering;
determine a voltage error based on the actual voltage value after the filtering and the voltage reference value; and
perform proportional integral, PI, feedback control based on the voltage error, and output the first control quantity.

In an embodiment, when the controller determines the current reference value of the target inductor based on the current voltage frequency of the traction network, performs feedback control by using the current reference value as the target current of the target inductor, and outputs the second control quantity, the controller is configured to:
determine the current reference value of the target inductor based on the current voltage frequency of the traction network;
detect an actual current value of the target inductor;
determine a current error based on the actual voltage value and the current reference value; and
perform proportional integral resonant, PIR, feedback control based on the current error, and output the second control quantity;
wherein a resonant frequency adopted in the PIR feedback control is 2fs, and fs represents the current voltage frequency of the traction network.

In an embodiment, when the controller superimposes the first control quantity and the second control quantity to generate the PWM pulse by modulation, and controls each switch in the active voltage regulating circuit to be turned on and off based on the PWM pulse, the controller is configured to:
superimpose the first control quantity and the second control quantity, and obtain a first PWM pulse and a second PWM pulse which are complementary, based on a result from comparing with a triangular carrier wave; and
control two switches in the active voltage regulating circuit to be turned on or off respectively through the first PWM pulse and the second PWM pulse.

In an embodiment, when the controller determines the current reference value of the target inductor based on the current voltage frequency of the traction network, the controller is configured to:
determine the current voltage frequency of the traction network through a phase-locked loop;
determine a total current of a secondary side of the transformer and multiplying it with a voltage of the traction network to obtain a first power signal; and
filter the first power signal for a power with a frequency of 2fs, and divide a result of the filtering by the voltage reference value of the target capacitor, and determine a result of the dividing as the current reference value of the target inductor;
wherein fs represents the current voltage frequency of the traction network.

In an embodiment, when the controller extracts the power with the frequency of 2fs in the first power signal, the controller is configured to:
filter the first power signal for the power with the frequency of 2fs through a second-order general integrator, SOGI .

A method for controlling a traction drive system of a train, applied to a controller, includes:
determining a voltage reference value of a target capacitor, performing feedback control by using the voltage reference value as a target voltage of the target capacitor, and outputting a first control quantity;
determining a current reference value of a target inductor based on a current voltage frequency of a traction network, and performing feedback control by using the current reference value as a target current of the target inductor, and outputting a second control quantity; and
superimposing the first control quantity and the second control quantity to generate a PWM pulse by modulation, controlling a switch in the active voltage regulating circuit to be turned on or off based on the PWM pulse, to cause a voltage of the target capacitor to follow the voltage reference value and a current of the target inductor to follow the current reference value;
wherein the traction drive system comprises a traction drive system main circuit, an active voltage regulating circuit and a controller; the traction drive system main circuit comprises a transformer, a rectifier circuit and an inverter circuit connected in sequence; a positive input terminal of the active voltage regulating circuit is connected to a positive terminal of a direct-current bus of the traction drive system main circuit, a negative input terminal of the active voltage regulating circuit is connected to a negative terminal of the direct-current bus of the traction drive system main circuit, and a negative output terminal of the active voltage regulating circuit is connected to the negative terminal of the direct-current bus; the target capacitor is any capacitor selected from the active voltage regulating circuit, and the target inductor is any inductor selected from the active voltage regulating circuit.

In an embodiment, the determining the voltage reference value of the target capacitor, performing feedback control by using the voltage reference value as the target voltage of the target capacitor, and outputting the first control quantity comprises:
determining the voltage reference value of the target capacitor;
detecting an actual voltage value of the target capacitor and performing filtering;
determining a voltage error based on the actual voltage value after the filtering and the voltage reference value; and
performing proportional integral, PI, feedback control based on the voltage error, and outputting the first control quantity.

In an embodiment, the determining the current reference value of the target inductor based on the current voltage frequency of the traction network, and performing feedback control by using the current reference value as the target current of the target inductor and outputting the second control quantity comprises:
determining the current reference value of the target inductor based on the current voltage frequency of the traction network;
detecting an actual current value of the target inductor;
determining a current error based on the actual voltage value and the current reference value; and
performing proportional integral resonant, PIR, feedback control based on the current error, and outputting the second control quantity;
wherein a resonant frequency adopted in the PIR feedback control is 2fs, and fs represents the current voltage frequency of the traction network.

In an embodiment, when the active voltage regulating circuit is an active voltage regulating circuit based on a two-level buck topology, or an active voltage regulating circuit based on a two-level boost topology, the superimposing the first control quantity and the second control quantity to generate the PWM pulse by modulation, controlling the switch in the active voltage regulating circuit to be turned on or off based on the PWM pulse includes:
superimposing the first control quantity and the second control quantity, and obtaining a first PWM pulse and a second PWM pulse which are complementary, based on a result from comparing with a triangular carrier wave; and
controlling two switches in the active voltage regulating circuit to be turned on or turned off respectively through the first PWM pulse and the second PWM pulse.

In an embodiment, the determining the current reference value of the target inductor based on the current voltage frequency of the traction network comprises:
determining the current voltage frequency of the traction network through a phase-locked loop;
determining a total current of a secondary side of the transformer and multiplying it with a voltage of the traction network to obtain a first power signal; and
filtering the first power signal for a power with frequency of 2fs, and dividing a result of the filtering by the voltage reference value of the target capacitor, and determining a result of the dividing as the current reference value of the target inductor;
wherein fs represents the current voltage frequency of the traction network.

A train includes the traction drive system of the train described above.

With the technical solutions provided in the embodiments of the present disclosure, an active voltage regulating circuit is arranged in a direct-current bus. Specifically, a positive input terminal of the active voltage regulating circuit is connected to a positive terminal of the direct-current bus of a traction drive system main circuit, a negative input terminal of the active voltage regulating circuit is connected to a negative terminal of the direct-current bus of the traction drive system main circuit, and a negative output terminal of the active voltage regulating circuit is connected to the negative terminal of the direct-current bus.

According to the solutions in the present disclosure, the controller may control the switch in the active voltage regulating circuit to be turned on or off through the PWM pulse, determines the voltage reference value of the target capacitor, performs feedback control by using the voltage reference value as the target voltage of the target capacitor, and outputs a first control quantity. Therefore, the actual voltage of the target capacitor follows the voltage reference value through the feedback control. In addition, according to the present disclosure, the current reference value of the target inductor is determined based on the current voltage frequency of the traction network, the feedback control is performed by using the current reference value as the target current of the target inductor, and a second control quantity is outputted. Therefore, the actual current of the target inductor follows the current reference value through the feedback control. The state of the active voltage regulating circuit interacts with the voltage of the direct-current bus. In a case that the voltage of the target capacitor is caused to follow the voltage reference value, and the current of the target inductor is caused to follow the current reference value, the stability of the voltage of the direct-current bus can be effectively ensured. That is, the secondary pulsation of the voltage of the direct-current bus can be effectively suppressed according to the solutions in the present disclosure.

Moreover, according to the present disclosure, the current reference value of the target inductor is determined based on the current voltage frequency of the traction network. Therefore, when the voltage frequency of the traction network changes, the current reference value of the target inductor may be changed accordingly, so that the current of the target inductor can effectively follow the current reference value at different power supply frequencies. The secondary pulsation of the voltage of the direct-current bus at different power supply frequencies can be effectively suppressed according to the solutions in the present disclosure. In addition, in the solutions of the present disclosure, multiple sets of filter reactances are not set to regulate the resonant frequency of LC circuit in response to different power supply frequencies as in the traditional technology. That is, according to the solutions of the present disclosure, the reliability of the system may be effectively ensured without increasing the complexity of the system.

### BRIEF DESCRIPTION OF THE DRAWINGS

In order to more clearly illustrate technical solutions in embodiments of the present disclosure or the conventional technology, the drawings used for describing the embodiments or the conventional technology will be briefly described hereinafter. Apparently, the drawings in the following description are only some examples of the present disclosure, and for those skilled in the art, other drawings may be obtained based on the provided drawing without any creative efforts.
FIG. 1 is a schematic structural diagram of a traction drive system of a train according to the conventional technology;
FIG. 2 is a schematic structural diagram of a traction drive system of a train according to the present disclosure;
FIG. 3 is a schematic structural diagram of a traction drive system of a train according to an embodiment of the present disclosure;
FIG. 4 is a schematic structural diagram of a traction drive system of a train according to another embodiment of the present disclosure;
FIG. 5 is a functional block diagram of a control strategy of a controller according to an embodiment of the present disclosure;
FIG. 6 is a flow chart of a method for controlling a traction drive system of a train according to an embodiment of the present disclosure;
FIG. 7a is a schematic diagram of an effect of active suppression on DC voltage pulsation with a power supply frequency of 50 Hz according to the present disclosure; and
FIG. 7b is a schematic diagram of an effect of active suppression on DC voltage pulsation with a power supply frequency of 16.7 Hz according to the present disclosure.

### DETAILED DESCRIPTION

The core of the present disclosure is to provide a traction drive system of a train, so as to effectively suppress secondary pulsation of a voltage of a direct-current bus at different power supply frequencies without increasing complexity of the system, to effectively ensure reliability of the system.

In order to enable those skilled in the art to better understand the solutions of the present disclosure, the present disclosure is further illustrated in detail below in conjunction with the attached drawings and embodiments. Apparently, the described embodiments are only some rather than all of the embodiments of the present disclosure. All other embodiments obtained by those skilled in the art based on the embodiments of the present disclosure without any creative work should fall within the protection scope of the present disclosure.

Referring to FIG. 2, FIG. 2 is a schematic structural diagram of a traction drive system of a train according to the present disclosure, the traction drive system of the train may include:
a traction drive system main circuit including a transformer 10, a rectifier circuit 20 and an inverter circuit 30 connected in sequence;
an active voltage regulating circuit 40 having a positive input terminal connected to a positive terminal of a direct-current bus of the traction drive system main circuit, a negative input terminal connected to a negative terminal of the direct-current bus of the traction drive system main circuit, and a negative output terminal connected to the negative terminal of the direct-current bus; and
a controller configured to determine a voltage reference value of a target capacitor, perform feedback control by using the voltage reference value as a target voltage of the target capacitor, and output a first control quantity; determine a current reference value of a target inductor based on a current voltage frequency of a traction network, and perform feedback control by using the current reference value as a target current of the target inductor, and output a second control quantity; superimpose the first control quantity and the second control quantity to generate a corresponding PWM pulse by modulation, control a corresponding switch in the active voltage regulating circuit 40 to be turned on or off based on the PWM pulse to cause a voltage of the target capacitor to follow the voltage reference value and a current of the target inductor to follow the current reference value;
wherein the target capacitor is any capacitor selected from the active voltage regulating circuit 40, and the target inductor is any inductor selected from the active voltage regulating circuit 40.

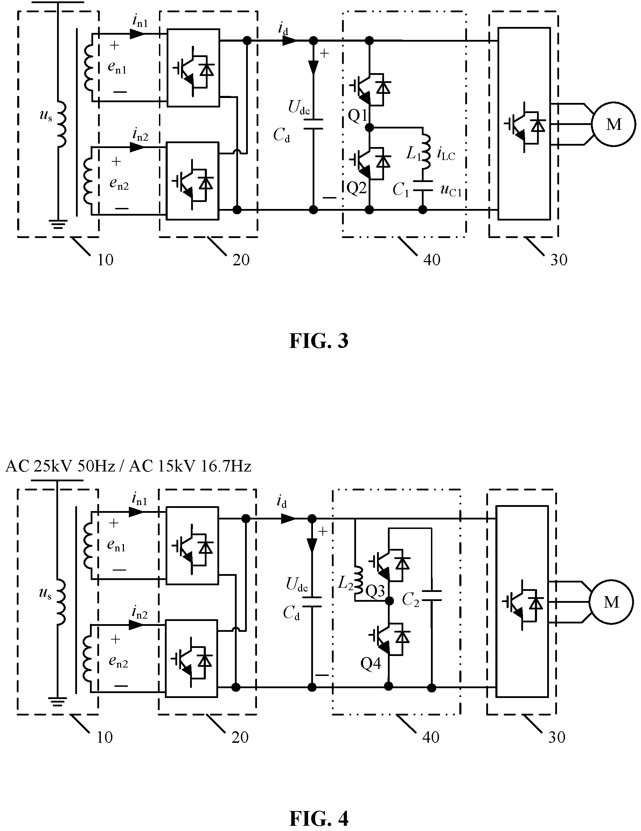

In an embodiment, the transformer 10 may be connected to a traction network, and the traction network may have multiple power supply frequencies. For example, in an embodiment shown in FIG. 3, the power supply frequencies include AC 25 kV/50 Hz and AC 15 kV/16.7 Hz. In other embodiments, there may be more power supply frequencies.

The transformer 10 may be provided with one or more secondary windings to be connected to different rectifier units in the rectifier circuit 20. For example, in the embodiment shown in FIG. 3, the transformer 10 is provided with two secondary windings, and the rectifier circuit 20 specifically includes two rectifier units connected in parallel. In other embodiments, the transformer 10 and the rectifier circuit 20 may have other structures. For example, according to a common solution in practice, the transformer 10 is provided with four secondary windings to be connected to four rectifier units in the rectifier circuit 20 respectively.

An intermediate DC link, that is, a DC bus of a traction drive system, is arranged between the rectifier circuit 20 and the inverter circuit 30. In practice, a DC support capacitor may be arranged in the intermediate DC link to ensure stability of the voltage of the DC bus. For example, the DC support capacitor Cd is shown in both FIG. 3 and FIG. 4 of the present disclosure. A terminal voltage of the DC support capacitor Cd, that is, the voltage of the DC bus, is denoted as Udc. The id in FIG. 3 and FIG. 4 represents a current of the DC bus.

The specific structure of the inverter circuit 30 may be set and adjusted according to actual requirements, and an output of the inverter circuit 30 may be connected to a load such as a motor.

According to the present disclosure, an active voltage regulating circuit 40 is arranged in the intermediate DC link to regulate the voltage. The specific structure of the active voltage regulating circuit 40 may be set according to the requirements. It can be understood that the state of the active voltage regulating circuit 40 requires to be able to interact with the voltage of the DC bus, such that after the controller controls the corresponding switch in the active voltage regulating circuit 40 to be turned on or off through feedback control, a voltage of the target capacitor follows the voltage reference value, and a current of the target inductor follows the current reference value, causing the voltage of the DC bus to reach a desirable state, that is, effectively ensuring the stability of the voltage of the DC bus and suppressing the secondary pulsation of the voltage of the DC bus.

For example, in the embodiment shown in FIG. 3, the active voltage regulating circuit 40 is an active voltage regulating circuit 40 based on a two-level buck topology. In an embodiment shown in FIG. 4, the active voltage regulating circuit 40 may be also an active voltage regulating circuit 40 based on a two-level boost topology, or may be an active voltage regulating circuit 40 based on a buck/boost topology with three or even more levels.

The active voltage regulating circuit 40 may be regarded as a four-port circuit. In an implementation of the present disclosure, it is not required to connect the positive output terminal of the active voltage regulating circuit 40 to a load or a DC bus. In the embodiment shown in FIG. 3, a first terminal of the first capacitor C1 is the positive output terminal of the active voltage regulating circuit 40, and in FIG. 4, the first terminal of C2 is the positive output terminal of the active voltage regulating circuit 40.

The controller may determine the voltage reference value of the target capacitor, which can be determined in advance by an operator based on the experience according to the specific structure of the active voltage regulating circuit 40. The controller performs feedback control by using the voltage reference value as the target voltage of the target capacitor, so that the actual voltage of the target capacitor can effectively follow the voltage reference value. Accordingly, the controller performs feedback control by using the current reference value as the target current of the target inductor, so that the actual current of the target inductor can effectively follow the current reference value.

When the train adopts different power supply frequencies, that is, the voltage frequencies of the traction network of the train are different, the pulse rate of the secondary pulsation on the DC side changes accordingly. Therefore, the controller determines the current reference value of the target inductor based on the current voltage frequency of the traction network, that is, a current reference value suitable for the current voltage frequency of the traction network. Therefore, the actual current of the target inductor can effectively follow the current reference value when performing feedback control on the actual current of the target inductor based on the current reference value. In practice, the current voltage frequency of the traction network may be updated according to a set period.

After determining the first control quantity and the second control quantity through feedback control, the controller superposes the first control quantity and the second control quantity, to obtain a final output command, based on which the corresponding PWM pulse may be generated by modulation, so as to control the corresponding switch in the active voltage regulating circuit 40 to be turned on or off based on the PWM pulse, so that the voltage of the target capacitor follows the voltage reference value, and the current of the target inductor follows the current reference value.

In an embodiment of the present disclosure, considering that the active voltage regulating circuit 40 has a simple structure and high reliability when adopting the two-level topology, the active voltage regulating circuit 40 may be an active voltage regulating circuit 40 based on the two-level buck topology, or the active voltage regulating circuit 40 may be an active voltage regulating circuit 40 based on the two-level boost topology.

Referring to FIG. 3, when the active voltage regulating circuit 40 is implemented by the active voltage regulating circuit 40 based on two-level buck topology, the active voltage regulating circuit 40 includes:
a first switch Q1, a second switch Q2, a first capacitor C1 serving as the target capacitor, and a first inductor L1 serving as the target inductor.

A first terminal of the first switch Q1 serves as a positive input terminal of the active voltage regulating circuit 40 and is connected to a positive terminal of a DC bus. A second terminal of the first switch Q1 is connected to a first terminal of the second switch Q2 and a first terminal of the first inductor L1. A second terminal of the second switch Q2 serves as a negative input terminal of the traction drive system main circuit and is connected to a negative terminal of the DC bus. A second terminal of the first inductor L1 is connected to the first terminal of the first capacitor C1. A second terminal of the first capacitor C1 serves as a negative output terminal of the active voltage regulating circuit 40 and is connected to the negative terminal of the DC bus. A control terminal of the first switch Q1 and a control terminal of the second switch Q2 are connected to the controller.

Referring to FIG. 4, when the active voltage regulating circuit 40 is implemented by the active voltage regulating circuit 40 based on the two-level boost topology, the active voltage regulating circuit 40 may include:
a third switch Q3, a fourth switch Q4, a second capacitor C2 serving as the target capacitor, and a second inductor L2 serving as the target inductor.

A first terminal of the second inductor L2 serves as a positive input terminal of the active voltage regulating circuit 40 and is connected to the positive terminal of the DC bus. A second terminal of the second inductor L2 is connected to a second terminal of the third switch Q3 and a first terminal of the fourth switch Q4. A second terminal of the fourth switch Q4 serves as a negative input terminal of the traction drive system main circuit and is connected to the negative terminal of the DC bus. A first terminal of the third switch Q3 is connected to a first terminal of the second capacitor C2. A second terminal of the second capacitor C2 serves as a negative output terminal of the active voltage regulating circuit 40 and is connected to the negative terminal of the DC bus. A control terminal of the third switch Q3 and a control terminal of the fourth switch Q4 are connected to the controller.

Whether the boost topology or the buck topology is selected is determined according to the actual requirements, which does not affect the implementation of the present disclosure. The controller is not shown in the drawings of the present disclosure.

In addition, it should be noted that when the active voltage regulating circuit 40 is the active voltage regulating circuit 40 based on the two-level buck topology, one capacitor and one inductor are arranged in the active voltage regulating circuit 40. Therefore, the first capacitor C1 serves as the target capacitor and the first inductor L1 serves as the target inductor. Similarly, when the active voltage regulating circuit 40 is the active voltage regulating circuit 40 based on the two-level boost topology, one capacitor and one inductor are arranged in the active voltage regulating circuit 40. Therefore, the second capacitor C2 serves as the target capacitor, and the second inductor L2 serves as the target inductor.

When the active voltage regulating circuit 40 is an active voltage regulating circuit 40 based on multilevel buck/boost topology, if multiple capacitors are arranged in the active voltage regulating circuit 40, the target capacitor for feedback control may be any capacitor selected from the active voltage regulating circuit 40. If multiple inductors are arranged in the active voltage regulating circuit 40, the target inductor for feedback control may be any inductor selected from the active voltage regulating circuit 40. It can be understood that when the selected target capacitor are different and the selected target inductors are different, the voltage reference value of the target capacitor and the current reference value of the target inductor need to be adjusted accordingly, that is, the voltage value of the target capacitor and the current value of the target inductor should be selected under the current operating condition under an ideal case.

Further, in an embodiment of the present disclosure, a first battery in the train is applied as the first capacitor C1. It is considered in the embodiment that the first capacitor C1 in the present disclosure is applied as an energy storage device, and cost is relatively low in a case of adopting the first capacitor C1 with a relatively small capacity. When a first capacitor C1 with a relatively large capacity is adopted, or the first battery in the train directly is applied as the first capacitor C1, a relatively large amount of electrical energy can be stored, thereby eliminating the secondary pulsation of the DC voltage and achieving functional reuse of energy storage.

For the electrical energy stored in the first capacitor C1, the controller may choose to it when the voltage of the DC bus is relatively low, to improve the energy utilization. For example, the first battery in the train is applied as the first capacitor C1, during occasions such as when the train brakes, the energy can be stored in the first battery, that is, by absorbing the energy from the DC bus. During occasions where the voltage of the DC bus is relatively low, such as when the train is uphill, the first battery may release the energy to the DC bus by controlling the active voltage regulating circuit 40, thereby improving the energy utilization.

Similarly, for the second capacitor C2 in FIG. 4, a second capacitor C2 with a relatively small capacity may be adopted, which has a low cost. A second capacitor C2 with a relatively large capacity may also be adopted, or the second capacitor C2 of the present disclosure may be implemented directly by a battery, so that the active voltage regulating circuit 40 of the present disclosure may be applied as an energy storage device to improve the energy utilization while eliminating the secondary pulsation of DC voltage.

In an embodiment of the present disclosure, when the controller determines the voltage reference value of the target capacitor, performs feedback control by using the voltage reference value as the target voltage of the target capacitor, and outputs the first control quantity, the controller is configured to:
determine the voltage reference value of the target capacitor;
detect an actual voltage value of the target capacitor and perform filtering;
determine a voltage error based on the actual voltage value after the filtering and the voltage reference value; and
perform PI feedback control based on the voltage error, and output the first control quantity.

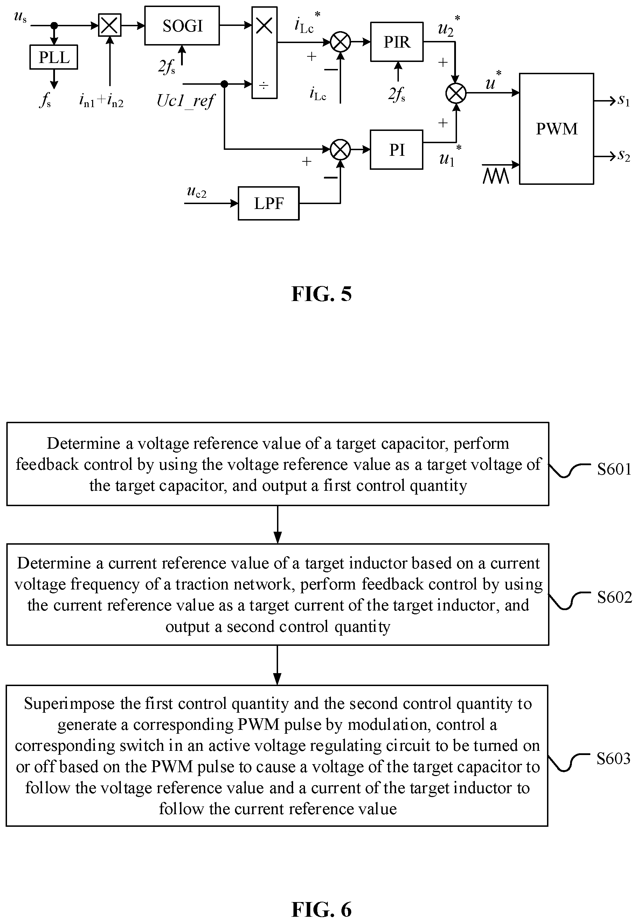

Referring to FIG. 5, FIG. 5 is a functional block diagram of a control strategy of a controller according to an embodiment of the present disclosure. The embodiment shown in FIG. 3 is taken as an example for illustrating the control principle of the controller.

As described above, the voltage reference value may be determined in advance by an operator based on factors such as the structure of the active voltage regulating circuit 40. In FIG. 5, the controller may determine a voltage reference value Uc1_ref of the target capacitor. In FIG. 3, the first capacitor C1 serves as the target capacitor. Therefore, the voltage reference value Uc1_ref of the target capacitor is also a voltage reference value Uc1_ref of the first capacitor C1.

Considering that there may be an error in the detection of the actual voltage value Uc1 of the target capacitor due to the noise, high frequency harmonics and the like, the detected actual voltage value of the target capacitor may be filtered to improve the accuracy. For example, in an embodiment shown in FIG. 5, the filtering is performed by a low-pass filter (LPF). In other occasions, other specific filtering manners may be selected according to actual requirements, without affecting the implementation of the present disclosure.

The filtered actual voltage value is subtracted from the voltage reference value Uc1_ref to obtain a voltage error, which represents a deviation between the actual voltage of the first capacitor C1 and the ideal voltage reference value. Feedback control may be performed based on the voltage error. In the embodiment shown in FIG. 5, considering that PI feedback control can take into account rapidity and reduce or eliminate a static error, the scheme of PI feedback control is selected, namely proportional integral feedback control, to output a first control quantity, which is represented by U₁* in FIG. 5.

In an embodiment of the present disclosure, when the controller determines the current reference value of the target inductor based on the current voltage frequency of the traction network, the controller is configured to:
determine the current voltage frequency of the traction network through a phase-locked loop;
determine a total current of a secondary side of the transformer 10 and multiplying it with the voltage of the traction network to obtain a first power signal; and
filter the first power signal for a power with a frequency of 2fs, and divide a result of the filtering by the voltage reference value of the target capacitor, and determine a result of the dividing as the determined current reference value of the target inductor;
wherein the fs represents the current voltage frequency of the traction network .

Referring to FIG. 5, the current voltage frequency of the traction network may be effectively extracted by a phase-locked loop (PLL), which is expressed as fs. In the embodiment shown in FIG. 3, the total current of the secondary side of the transformer 10 is equal to iₙ₁+iₙ₂. Herein, iₙ₁ and iₙ₂ are the respective current values of the two secondary windings of the transformer 10 shown in FIG. 3.

The total current of the secondary side of the transformer 10 is multiplied by the voltage Us of the traction network, and a first power signal is obtained. Considering that the solutions in the present disclosure are to eliminate the secondary pulsation of the DC voltage, and the secondary pulsation has a frequency of 2fs, the present disclosure would filter the first power signal for the power with the frequency of 2fs, and divide a result of the filtering by the voltage reference value of the target capacitor, that is, divide the result of the filtering by the voltage reference value Uc1_ref of the target capacitor, and the current reference value i_{Lc}* of the target inductor may be obtained. When the feedback control is performed on the current of the target inductor based on the current reference value i_{Lc}*, the actual current value of the target inductor is caused to follow the current reference value i_{Lc}* of the target inductor, effectively limiting the secondary pulsation of the DC voltage.

In an embodiment, in a case of filtering the first power signal for the power with the frequency of 2fs, for example, the controller may filter the first power signal for the power with the frequency of 2fs through SOGI. A resonant bandwidth of a second-order general integrator (SOGI) is fixed, and the bandwidth is equal to a quasi-resonant link of the resonant frequency, when other frequency is inputted, the error is hardly attenuated, when the frequency is close to the resonant frequency, the error may attenuated to some extent, and when the frequency is equal to the resonant frequency, there is a large attenuation. The first power signal can be effectively filtered for the power with the frequency of 2fs through SOGI, so that an accurate current reference value suitable for the current voltage frequency of the traction network is obtained subsequently.

In an embodiment of the present disclosure, when the controller determines a current reference value of the target inductor based on the current voltage frequency of the traction network, performs feedback control by using the current reference value as the target current of the target inductor, and outputs a second control quantity, the controller is configured to:
determine the current reference value of the target inductor based on the current voltage frequency of the traction network ;
detect an actual current value of the target inductor;
determine a current error based on the actual voltage value and the current reference value; and
perform PIR feedback control based on the current error, and output the second control quantity;
wherein a resonant frequency adopted in the PIR feedback control is 2fs, and fs represents the current voltage frequency of the traction network.

FIG. 5 is taken as an example for illustration. After the controller determines the current reference value i_{Lc}* of the target inductor based on the current voltage frequency of the traction network, the actual current value i_{Lc} of the target inductor is subtracted from the current reference value i_{Lc}* of the target inductor to obtain the current error, which represents the deviation between the actual current of the first inductor L1 in FIG. 3 and the ideal current reference value herein. Feedback control may be performed based on the current error.

In the embodiment shown in FIG. 5, considering that the solutions in the present disclosure are to suppress effectively the secondary pulsation of the DC voltage, a proportional integral resonant (PIR) feedback control scheme is adopted to output the second control quantity, which is expressed as U₂* in FIG. 5. Specifically, considering that the PIR controller can achieve zero static error in the output of the DC system, but it is not as effective for achieving zero static error in the output of the AC system, the PIR can achieve zero static error with infinite gain at the resonant point. In addition, the PIR feedback control has high stability and dynamic-static performance, and can effectively cause the current of the target inductor to follow the current reference value, thereby effectively suppressing the secondary pulsation of DC voltage.

In an embodiment of the present disclosure, when the controller superimposes the first control quantity and the second control quantity to generate the corresponding PWM pulse by modulation, and controls each switch in the active voltage regulating circuit 40 to be turned on or off based on the PWM pulse, the controller is configured to:
superimpose the first control quantity and the second control quantity, and obtain complementary first PWM pulse and second PWM pulse based on a result from comparing with a triangular carrier wave; and
control the two switches in the active voltage regulating circuit 40 to be turned on or turned off respectively through the first PWM pulse and the second PWM pulse.

Figure 5 is still taken as an example for illustration. The controller superimposes the first control quantity and the second control quantity to obtain a quantity represented by U* in FIG. 5. U* may be compared with a triangular carrier wave. The on-off states of the two switches in the active voltage regulating circuit 40 are complementary when the controller adopts the two-level buck or boost topology. Therefore, based on a result from the comparison between U* and the triangular carrier wave, the complementary first PWM pulse and second PWM pulse may be obtained, which are respectively represented by S1 and S2 in FIG. 5, so that the two switches in the active voltage regulating circuit 40 are respectively controlled to be on or off.

In a case of verifying the correctness of the solutions of the present disclosure, a simulation model is built using Matlab/Simulink software, it is considered that a secondary pulsating amplitude of the DC voltage of the single-phase rectifier is inversely proportional to a fundamental frequency of the power grid, in order to ensure that the system is controllable at a relatively low power supply frequency (16.7 Hz), a suitable DC side support capacitor is selected during the simulation to ensure that a peak-to-peak value of the DC side voltage pulsation is less than 150 V at the power supply frequency of 16.7 Hz.

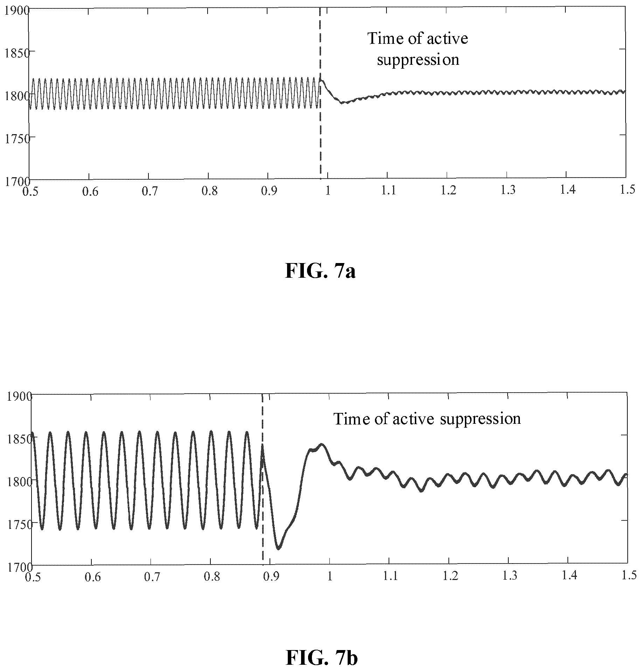

In a case that the frequency of the power grid is 50Hz, the peak-to-peak value of the voltage pulsation of the bus is about 40V without applying the solution for actively suppressing the DC voltage pulsation provided according to the present disclosure. In a case that the solution of the present disclosure is applied, the peak-to-peak value the voltage pulsation of the bus is reduced to less than 10V as shown in FIG. 7a.

In a case that the frequency of the power grid is 16.7 Hz, the peak-to-peak value of the voltage pulsation of the bus is about 120 V without applying the solution for actively suppressing the DC voltage pulsation provided according to the present disclosure. In a case that the solution of the present disclosure is applied, the peak-to-peak value of the voltage pulsation of the bus is reduced to less than 30V as shown in FIG. 7b.

With the technical solutions provided in the embodiments of the present disclosure, an active regulating circuit 40 is arranged at a DC bus. A positive input terminal of the active voltage regulating circuit 40 is connected to a positive terminal of the DC bus of the traction drive system main circuit, a negative input terminal of the active voltage regulating circuit 40 is connected to a negative terminal of the DC bus of the traction drive system main circuit, and a negative output terminal of the active voltage regulating circuit 40 is connected to the negative terminal of the DC bus.

According to the solutions of the present disclosure, the controller may control the corresponding switch in the active voltage regulating circuit 40 to be turned on or off through the PWM pulse, determines the voltage reference value of the target capacitor, performs feedback control by using the voltage reference value as the target voltage of the target capacitor, and outputs a first control quantity. Therefore, the actual voltage of the target capacitor follows the voltage reference value through the feedback control. In addition, according to the present disclosure, the current reference value of the target inductor is determined based on the current voltage frequency of the traction network, feedback control is performed by using the current reference value as the target current of the target inductor, and a second control quantity is outputted. Therefore, the actual current of the target inductor follows the current reference value through the feedback control. The state of the active voltage regulating circuit 40 interacts with the voltage of the DC bus. In a case that the voltage of the target capacitor is caused to follow the voltage reference value, and the current of the target inductor is caused to follow the current reference value, the stability of the voltage of the DC bus can be effectively ensured. That is, the secondary pulsation of the voltage of the DC bus can be effectively suppressed according to the solutions in the present disclosure.

Moreover, according to the present disclosure, the current reference value of the target inductor is determined based on the current voltage frequency of the traction network. Therefore, in a case that the voltage frequency of the traction network changes, the current reference value of the target inductor may be changed accordingly, so that the current of the target inductor can follow effectively the current reference value at different power supply frequencies. The secondary pulsation of the voltage of the DC bus at different power supply frequencies can be effectively suppressed according to the solutions in the present disclosure. In addition, it is not required in the solutions of the present disclosure to set multiple sets of filter reactances to regulate the resonant frequency of LC circuit in response to different power supply frequencies as in the traditional technology, that is, according to the solutions of the present disclosure, the reliability of the system may be ensured effectively without increasing the complexity of the system.

Corresponding to the above method embodiments, a method for controlling a traction drive system of a train is provided according to an embodiment of the present disclosure, which may be referred to as in the above description.

Referring to FIG. 6, FIG. 6 is a flow chart of a method for controlling a traction drive system of a train according to the present disclosure. The method is applied to a controller and includes the following steps S601 to S603.

In step S601, a voltage reference value of a target capacitor is determined, feedback control is performed by using the voltage reference value as the target voltage of the target capacitor, and a first control quantity is outputted.

In step S602, a current reference value of the target inductor is determined based on a current voltage frequency of a traction network, feedback control is performed by using the current reference value as the target current of the target inductor, and a second control quantity is outputted.

In step S603, the first control quantity and the second control quantity are superimposed to generate a corresponding PWM pulse by modulation, a corresponding switch in the active voltage regulating circuit is controlled to be turned on or off based on the PWM pulse to cause the voltage of the target capacitor to follow the voltage reference value and the current of the target inductor to follow the current reference value.

The traction drive system includes a traction drive system main circuit, an active voltage regulating circuit and a controller. The traction drive system main circuit includes a transformer, a rectifier circuit and an inverter circuit connected in sequence. A positive input terminal of the active voltage regulating circuit is connected to a positive terminal of a DC bus of the traction drive system main circuit, a negative input terminal of the active voltage regulating circuit is connected to a negative terminal of the DC bus of the traction drive system main circuit, and a negative output terminal of the active voltage regulating circuit is connected to the negative terminal of the DC bus. The target capacitor is any capacitor selected from the active voltage regulating circuit, and the target inductor is any inductor selected from the active voltage regulating circuit.

In an embodiment of the present disclosure, step S601 includes:
determining the voltage reference value of the target capacitor;
detecting an actual voltage value of the target capacitor and performing filtering;
determining a voltage error based on the actual voltage value after the filtering and the voltage reference value; and
performing PI feedback control based on the voltage error, and outputting the first control quantity.

In an embodiment of the present disclosure, step S602 includes:
determining the current reference value of the target inductor based on the current voltage frequency of the traction network ;
detecting an actual current value of the target inductor;
determining a current error based on the actual voltage value and the current reference value; and
performing PIR feedback control based on the current error, and outputting the second control quantity;
wherein the resonant frequency adopted in the PIR feedback control is 2fs, and fs represents the current voltage frequency of the traction network.

In an embodiment of the present disclosure, when the active voltage regulating circuit is an active voltage regulating circuit based on two-level buck topology, or an active voltage regulating circuit based on two-level boost topology, step S603 includes:
superimposing the first control quantity and the second control quantity, and obtaining complementary first PWM pulse and second PWM pulse based on a result from comparing with a triangular carrier wave; and
controlling the two switches in the active voltage regulating circuit to be turned on or turned off respectively through the first PWM pulse and the second PWM pulse.

In an embodiment of the present disclosure, the determining a current reference value of the target inductor based on a current voltage frequency of a traction network in step S602 includes:
determining the current voltage frequency of the traction network through a phase-locked loop;
determining a total current of the secondary side of the transformer and multiplying it with the voltage of the traction network to obtain a first power signal; and
filtering the first power signal for a power with a frequency of 2fs, and dividing a result of the filtering by the voltage reference value of the target capacitor, and determining a result of the dividing as the determined current reference value of the target inductor;
wherein fs represents the current voltage frequency of the traction network .

In an embodiment of the present disclosure, the extracting the power with a frequency of 2fs in the first power signal includes:
filtering, by the controller, the first power signal for the power with the frequency of 2fs through SOGI.

Corresponding to the above method embodiments and system embodiments, a train is provided according to an embodiment of the present disclosure, including the traction drive system of the train according to any one of the embodiments described above, which may be referred to as in the above description.

It should also be noted that relational terms herein such as first and second etc. are only for distinguishing one entity or operation from another without necessarily requiring or implying such actual relationship or order between these entities or operations. Furthermore, the term "include", "comprise" or any other variation thereof is intended to cover a non-exclusive inclusion, so that a process, method, article, or apparatus comprising a set of elements includes not only those elements, but also other elements not expressly listed or elements inherent in such a process, method, article, or device. Unless expressively limited, the element defined by the statement "including a/an..." does not exclude the case that other similar elements may exist in the process, method, article or device including the series of elements.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the modules and steps of each example have been described in general terms of functionality in the above description. Whether these functionalities are performed in hardware or software depends on the specific application and design constraints of the technical solution. Those skilled in the art may implement the described functionality in various manners for each specific application, while such implementations should not be considered to be beyond the scope of the present disclosure.

Specific examples are used herein to describe the principle and implementation of the present disclosure. The description of the above embodiments is only for facilitating understanding of the technical solutions and core ideas of the present disclosure. It should be noted that, several improvements and modifications may be made by those skilled in the art to the present disclosure without departing from the principle of the present disclosure, and these improvements and modifications also fall within the protection scope of the present disclosure.

## Claims

1. A traction drive system of a train, comprising:
a traction drive system main circuit comprising a transformer, a rectifier circuit and an inverter circuit that are connected in sequence;
an active voltage regulating circuit having a positive input terminal connected to a positive terminal of a direct-current bus of the traction drive system main circuit, a negative input terminal connected to a negative terminal of the direct-current bus of the traction drive system main circuit, and a negative output terminal connected to the negative terminal of the direct-current bus; and
a controller configured to determine a voltage reference value of a target capacitor, perform feedback control by using the voltage reference value as a target voltage of the target capacitor, and output a first control quantity; determine a current reference value of a target inductor based on a current voltage frequency of a traction network, and perform feedback control by using the current reference value as a target current of the target inductor, and output a second control quantity; superimpose the first control quantity and the second control quantity to generate a PWM pulse by modulation, control a switch in the active voltage regulating circuit to be turned on or off based on the PWM pulse to cause a voltage of the target capacitor to follow the voltage reference value and a current of the target inductor to follow the current reference value;
wherein the target capacitor is any capacitor selected from the active voltage regulating circuit, and the target inductor is any inductor selected from the active voltage regulating circuit.

2. The traction drive system of the train according to claim 1, wherein the active voltage regulating circuit is an active voltage regulating circuit based on a two-level buck topology, and the active voltage regulating circuit comprises:
a first switch, a second switch, a first capacitor serving as the target capacitor, and a first inductor serving as the target inductor;
wherein a first terminal of the first switch serves as the positive input terminal of the active voltage regulating circuit and is connected to the positive terminal of the direct-current bus; a second terminal of the first switch is connected to a first terminal of the second switch and a first terminal of the first inductor; a second terminal of the second switch serves as a negative input terminal of the traction drive system main circuit and is connected to the negative terminal of the direct-current bus; a second terminal of the first inductor is connected to a first terminal of the first capacitor; a second terminal of the first capacitor serves as the negative output terminal of the active voltage regulating circuit and is connected to the negative terminal of the direct current bus; and a control terminal of the first switch and a control terminal of the second switch are connected to the controller.

3. The traction drive system of the train according to claim 2, wherein a first battery in the train is applied as the first capacitor.

4. The traction drive system of the train according to claim 1, wherein the active voltage regulating circuit is an active voltage regulating circuit based on a two-level boost topology, and the active voltage regulating circuit comprises:
a third switch, a fourth switch, a second capacitor serving as the target capacitor, and a second inductor serving as the target inductor;
wherein a first terminal of the second inductor serves as the positive input terminal of the active voltage regulating circuit and is connected to the positive terminal of the direct-current bus; a second terminal of the second inductor is connected to a second terminal of the third switch and a first terminal of the fourth switch; a second terminal of the fourth switch serves as a negative input terminal of the traction drive system main circuit and is connected to the negative terminal of the direct-current bus; a first terminal of the third switch is connected to a first terminal of the second capacitor; a second terminal of the second capacitor serves as the negative output terminal of the active voltage regulating circuit and is connected to the negative terminal of the direct-current bus; and a control terminal of the third switch and a control terminal of the fourth switch are connected to the controller.

5. The traction drive system of the train according to claim 1, wherein when the controller determines the voltage reference value of the target capacitor, performs feedback control by using the voltage reference value as the target voltage of the target capacitor, and outputs the first control quantity, the controller is configured to:
determine the voltage reference value of the target capacitor;
detect an actual voltage value of the target capacitor and perform filtering;
determine a voltage error based on the actual voltage value after the filtering and the voltage reference value; and
perform proportional integral, PI, feedback control based on the voltage error, and output the first control quantity.

6. The traction drive system of the train according to claim 1, wherein when the controller determines the current reference value of the target inductor based on the current voltage frequency of the traction network, performs feedback control by using the current reference value as the target current of the target inductor, and outputs the second control quantity, the controller is configured to:
determine the current reference value of the target inductor based on the current voltage frequency of the traction network;
detect an actual current value of the target inductor;
determine a current error based on the actual voltage value and the current reference value; and
perform proportional integral resonant, PIR, feedback control based on the current error, and output the second control quantity;
wherein a resonant frequency adopted in the PIR feedback control is 2fs, and fs represents the current voltage frequency of the traction network.

7. The traction drive system of the train according to claim 2 or 4, wherein when the controller superimposes the first control quantity and the second control quantity to generate the PWM pulse by modulation, and controls each switch in the active voltage regulating circuit to be turned on and off based on the PWM pulse, the controller is configured to:
superimpose the first control quantity and the second control quantity, and obtain a first PWM pulse and a second PWM pulse which are complementary, based on a result from comparing with a triangular carrier wave; and
control two switches in the active voltage regulating circuit to be turned on or off respectively through the first PWM pulse and the second PWM pulse.

8. The traction drive system of the train according to claims 1 to 6, wherein when the controller determines the current reference value of the target inductor based on the current voltage frequency of the traction network, the controller is configured to:
determine the current voltage frequency of the traction network through a phase-locked loop;
determine a total current of a secondary side of the transformer and multiplying it with a voltage of the traction network to obtain a first power signal; and
filter the first power signal for a power with a frequency of 2fs, and divide a result of the filtering by the voltage reference value of the target capacitor, and determine a result of the dividing as the current reference value of the target inductor;
wherein fs represents the current voltage frequency of the traction network.

9. The traction drive system of the train according to claim 8, wherein when the controller extracts the power with the frequency of 2fs in the first power signal, the controller is configured to:
filter the first power signal for the power with the frequency of 2fs through a second-order general integrator, SOGI.

10. A method for controlling a traction drive system of a train, applied to a controller, comprising:
determining a voltage reference value of a target capacitor, performing feedback control by using the voltage reference value as a target voltage of the target capacitor, and outputting a first control quantity;
determining a current reference value of a target inductor based on a current voltage frequency of a traction network, and performing feedback control by using the current reference value as a target current of the target inductor, and outputting a second control quantity; and
superimposing the first control quantity and the second control quantity to generate a PWM pulse by modulation, controlling a switch in the active voltage regulating circuit to be turned on or off based on the PWM pulse, to cause a voltage of the target capacitor to follow the voltage reference value and a current of the target inductor to follow the current reference value;
wherein the traction drive system comprises a traction drive system main circuit, an active voltage regulating circuit and a controller; the traction drive system main circuit comprises a transformer, a rectifier circuit and an inverter circuit connected in sequence; a positive input terminal of the active voltage regulating circuit is connected to a positive terminal of a direct-current bus of the traction drive system main circuit, a negative input terminal of the active voltage regulating circuit is connected to a negative terminal of the direct-current bus of the traction drive system main circuit, and a negative output terminal of the active voltage regulating circuit is connected to the negative terminal of the direct-current bus; the target capacitor is any capacitor selected from the active voltage regulating circuit, and the target inductor is any inductor selected from the active voltage regulating circuit.

11. The method for controlling the traction drive system of the train according to claim 10, wherein the determining the voltage reference value of the target capacitor, performing feedback control by using the voltage reference value as the target voltage of the target capacitor, and outputting the first control quantity comprises:
determining the voltage reference value of the target capacitor;
detecting an actual voltage value of the target capacitor and performing filtering;
determining a voltage error based on the actual voltage value after the filtering and the voltage reference value; and
performing proportional integral, PI, feedback control based on the voltage error, and outputting the first control quantity.

12. The method for controlling the traction drive system of the train according to claim 10, the determining the current reference value of the target inductor based on the current voltage frequency of the traction network, and performing feedback control by using the current reference value as the target current of the target inductor and outputting the second control quantity comprises:
determining the current reference value of the target inductor based on the current voltage frequency of the traction network;
detecting an actual current value of the target inductor;
determining a current error based on the actual voltage value and the current reference value; and
performing proportional integral resonant, PIR, feedback control based on the current error, and outputting the second control quantity;
wherein a resonant frequency adopted in the PIR feedback control is 2fs, and fs represents the current voltage frequency of the traction network.

13. The method for controlling the traction drive system of the train according to claim 10, wherein when the active voltage regulating circuit is an active voltage regulating circuit based on a two-level buck topology, or an active voltage regulating circuit based on a two-level boost topology, the superimposing the first control quantity and the second control quantity to generate the PWM pulse by modulation, controlling the switch in the active voltage regulating circuit to be turned on or off based on the PWM pulse comprises:
superimposing the first control quantity and the second control quantity, and obtaining a first PWM pulse and a second PWM pulse which are complementary, based on a result from comparing with a triangular carrier wave; and
controlling two switches in the active voltage regulating circuit to be turned on or turned off respectively through the first PWM pulse and the second PWM pulse.

14. The method for controlling the traction drive system of the train according to any one of claims 10 to 13, wherein the determining the current reference value of the target inductor based on the current voltage frequency of the traction network comprises:
determining the current voltage frequency of the traction network through a phase-locked loop;
determining a total current of a secondary side of the transformer and multiplying it with a voltage of the traction network to obtain a first power signal; and
filtering the first power signal for a power with frequency of 2fs, and dividing a result of the filtering by the voltage reference value of the target capacitor, and determining a result of the dividing as the current reference value of the target inductor;
wherein fs represents the current voltage frequency of the traction network.

15. A train, comprising the traction drive system of the train according to any one of claims 1 to 10.
